# EUROPÄISCHE PATENTSCHRIFT

(11) **EP 0 561 257 B1**
(45) Veröffentlichungstag und Bekanntmachung des Hinweises auf die Patenterteilung: **23.10.1996**
(21) Anmeldenummer: 93103784.0
(22) Anmeldetag: 09.03.1993
(51) Int. Cl.: H04B 1/16

(54) **Schaltungsanordnung zur Überbrückung von kurzzeitigen Spannungsabfällen in batteriegespeisten Funkgeräten**
Circuit arrangement for bridging momentary voltage drops in battery supplied radio devices
Agencement de circuit pour supporter de courtes défaillances de tension dans les appareils de télécommunication alimentés par batterie

(30) Priorität: 20.03.1992 DE 4209177
(43) Veröffentlichungstag der Anmeldung: 22.09.1993
(73) Patentinhaber: SIEMENS AKTIENGESELLSCHAFT, 80333 München (DE)
(72) Erfinder: Molière, Thomas, W-8000 München 40 (DE)

(56) Entgegenhaltungen:
- EP-A- 0 032 598
- US-A- 3 656 052
- PATENT ABSTRACTS OF JAPAN vol. 10, no. 87 (E-393) (2144) 5. April 1986 & JP-A-60 230 722 (NIPPON DENKI)

## Beschreibung

Die Erfindung bezieht sich auf ein Funkgerät mit einer Batterie-Stromversorgung und mit einer Einrichtung zur Spannungshochsetzung für die Überbrückung von kurzzeitigen Spannungsabfällen.

Ein Funkgerät mit einer Einrichtung zur Spannungshochsetzung ist aus der JP-A-60 230 722 bekannt.

In TDMA-Funkgeräten (TDMA = Time Division Multiple Access), bei denen in einem Frequenzband mehrere Zeitkanäle vorhanden sind und in Zeitschlitzen gesendet wird, fließt während der kurzen Sendebursts ein relativ hoher Batteriestrom, der zu so hohen Spannungsabfällen in der Batterie und den Zuleitungen führt, daß die kritische Versorgungsspannung für integrierte Schaltungen oder Spannungsregler besonders am Ende der Batterieentladezeit unterschritten werden kann.

In FDMA-Funkgeräten (FDMA = Frequency Division Multiple Access) ist das Verhältnis von Sendestrom zu Durchschnittsstrom nicht sehr groß. Die Zellenzahl der Batterie und die Zuleitungswiderstände werden dann so ausgelegt, daß kritische Versorgungsspannungen nicht unterschritten werden. Um bei den neuerdings verwendeten TDMA-Funkgeräten die störenden kurzzeitigen Spannungsabfälle auszugleichen, kann z.B. die Batteriespannung durch Erhöhung der Zellenzahl vergrößert oder durch einen Schaltregler hochgesetzt werden. Bei knapper Batteriespannung kann ferner ein sehr großer Speicherkondensator parallel zur Batterie gelegt werden, der während der Sendebursts den Hauptstrom für die Sendeendstufe übernimmt. Die Abmessungen eines derartigen Kondensators überschreiten aber meistens jedes zulässige Maß.

Der Erfindung liegt die Aufgabe zugrunde, für das vorstehend genannte Problem eine einfache Lösung anzugeben.

Diese Aufgabe wird gemäß der Erfindung in der Weise gelöst, daß die Einrichtung zur Spannungshochsetzung aus einem im Stromversorgungsweg spannungskritischer Schaltungsteile liegenden, im Nicht-Sendebetrieb aufgeladenen Kondensator besteht, dessen Spannung während der in der Sendeendstufe ausgesendeten Sendebursts im Stromversorgungsweg der spannungskritischen Schaltungsteile zu der Batteriespannung addiert wird, und aus einem von einer Steuerung der Sendebursts angesteuerten Schaltelement im Stromversorgungsweg der Sendeendstufe, durch das zugleich ein Schaltelement im Stromversorgungsweg spannungskritischer Schaltungsteile synchron vom Sendeburstbefehl geschaltet und die Zuschaltung des Kondensators in diesem Weg bewirkt wird.

Es wird dabei also während der Sendebursts ein vorher aufgeladener Kondensator auf die Batteriespannung aufgestockt. Damit werden für die Dauer des auftretenden Spannungsabfalles die kritischen Spannungsteile, nicht jedoch die Sendeendstufe, mit einer erhöhten Spannung versorgt. Der Kondensator kann dabei relativ klein gehalten werden, wenn er nur für die Versorgung einiger spannungskritischer Schaltungsteile benutzt wird. Die Sendeendstufe ist unkritisch in Bezug auf Unterspannungen bzw. wird so ausgelegt. Die erforderlichen Umschaltsignale sind im TDMA-Funkgerät vorhanden.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen:
- Figur 1: einen Spannungshochsetzer in schematischer Darstellung mit mechanischen Schaltern und
- Figur 2: einen Spannungshochsetzer mit Halbleiterschaltern.

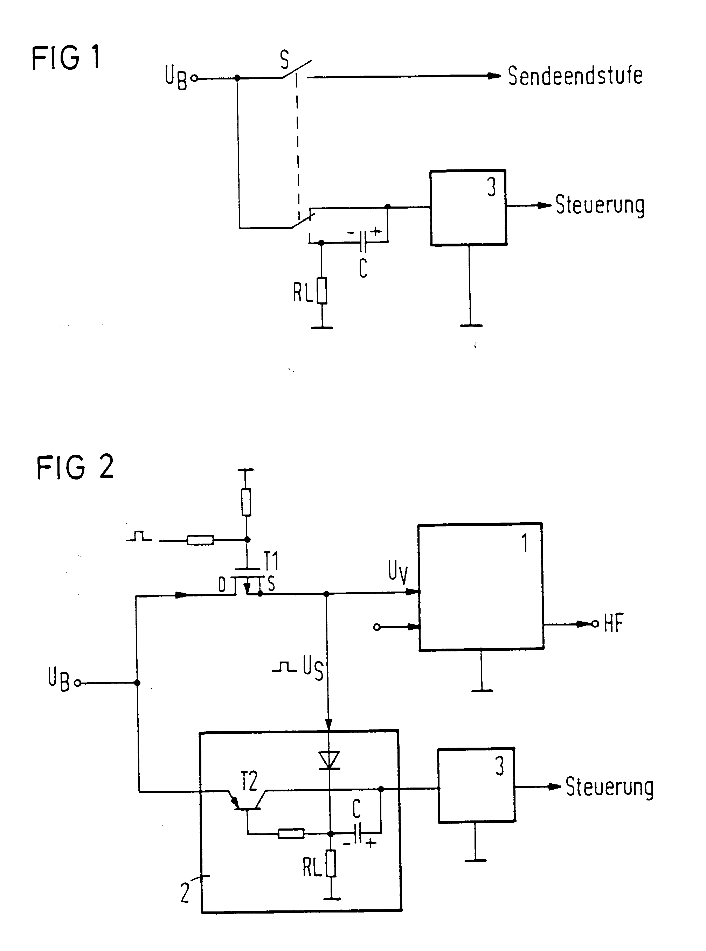

Beim Spannungshochsetzer nach Figur 1 ist eine Batteriespannung U_{B} von beispielsweise 6 V vorgesehen, die über einen Schalter S mit zwei Umschaltkontakten die Versorgungsspannung für die Sendeendstufe eines Funkgerätes einerseits und die kritische Versorgungsspannung für integrierte Schaltungen andererseits liefert. Damit die letztgenannte Versorgungsspannung für die spannungskritischen Schaltungsteile nicht unter einen kritischen Wert abfällt, ist in diesem Weg ein Spannungshochsetzer angeordnet. Dieser enthält einen Kondensator C und einen Ladewiderstand R_{L}. Im Nicht-Sendebetrieb - in der Figur 1 gezeigte Schalterstellung - wird der Kondensator C (z.B. C = 22 µF, Aufladezeitkonstante τₐ ≈ 5 ms bei R_{L} = 220Ω) aufgeladen. Während der in der Sendeendstufe ausgesendeten Sendebursts - zweite Schalterstellung des Schalters S - wird die Spannung des Kondensators C im Versorgungsweg der spannungskritischen Schaltungsteile zu der Batteriespannung addiert. Dem Spannungshochsetzer ist ein Regler 3 für beispielsweise 5 V nachgeschaltet, dessen Ausgangsspannung den nachfolgenden Schaltungsteilen zur Steuerung zugeführt wird.

Wenn der Stromverbrauch der Steuerung beispielsweise 150 mA beträgt, ergibt sich bei den angegebenen Bemessungswerten eine Entladezeitkonstante des Kondensators C von τₑ ≈ 1 ms, was für die Dauer eines Sendebursts von etwa 550 µs, wie er beispielsweise im Mobilfunksystem GSM verwendet wird, ausreicht.

Der geschaltete Spannungshochsetzer stellt sicher, daß die Eingangsspannung des 5-V-Spannungsreglers für die Steuerung immer über 5 V bleibt, auch wenn die Batteriespannung U_{B}, bedingt durch den Innenwiderstand der Batterie, weit unter 5 V absinkt.

Figur 2 zeigt einen geschalteten Spannungshochsetzer mit elektronischen Schaltelementen. Als Batteriespannung U_{B} sind beispielsweise 6 V vorgesehen. Die Batteriespannung dient der Spannungsversorgung der Sendeendstufe 1 und weiterer, spannungskritischer Schaltungsteile im Funkgerät. Diesen wird die Versorgungsspannung über einen Spannungshochsetzer 2 und einen nachfolgenden Regler 3 zugeführt. Im Weg für die Spannungsversorgung der Sendeendstufe 1 ist ein aus einem Power-FET bestehender Schalter T1 eingefügt, der von der Steuerung der Sendebursts über einen Schaltbefehl angesteuert wird. Der mit S (Source) bezeichnete Ausgang des Schaltelements T1 ist mit dem Versorgungsspannungseingang der Sendeendstufe 1 verbunden und zugleich über eine Entkopplungsdiode an den Spannungshochsetzer 2 angeschlossen. Mit der geschalteten Versorgungsspannung U_{S} der Sendeendstufe 1 wird erreicht, daß außerhalb der Sendebursts der Kreis stromlos ist. Zugleich kann die Schaltspannung U_{S} für die Sendeendstufe 1 auch für den Spannungshochsetzer 2 benutzt werden, so daß vom Sendeburstbefehl eine synchrone Steuerung der Schalter T1 im Weg der Spannungsversorgung für die Sendeendstufe 1 und den Schalter T2 im Spannungshochsetzer 2 im Versorgungsweg spannungskritischer Schaltungsteile erfolgt. Der Spannungshochsetzer 2 enthält einen Transistor-Schalter T2, einen Kondensator C und einen Ladewiderstand R_{L}. Im Nicht-Sendebetrieb wird der Kondensator über den Transistor T2 und den Ladewiderstand R_{L} von der Batteriespannung U_{B} aufgeladen. Nach Durchschaltung des Transistors T1 durch den Sendeburstbefehl und damit erfolgter Sperrung des Transistors T2 im Spannungshochsetzer durch die geschaltete Versorgungsspannung U_{S} wird einerseits die Sendeendstufe 1 auf Sendebetrieb geschaltet und andererseits die Kondensatorspannung im Stromversorgungsweg spannungskritischer Schaltungsteile der Batteriespannung zugeschaltet. Für die Schalter wird in vorteilhafter Weise eine Vorschaltzeit von einigen hundert µs vorgesehen.

## Patentansprüche

1. Funkgerät mit einer Batterie-Stromversorgung und mit einer Einrichtung zur Spannungshochsetzung für die Überbrückung von kurzzeitigen Spannungsabfällen,
**dadurch gekennzeichnet**, daß die Einrichtung zur Spannungshochsetzung aus einem im Stromversorgungsweg spannungskritischer Schaltungsteile liegenden, im Nicht-Sendebetrieb aufgeladenen Kondensator (C) besteht, dessen Spannung während der in der Sendeendstufe (1) ausgesendeten Sendebursts im Stromversorgungsweg der spannungskritischen Schaltungsteile zu der Batteriespannung (U_{B}) addiert wird, und aus einem von einer Steuerung der Sendebursts angesteuerten Schaltelement (S, T1) im Stromversorgungsweg der Sendeendstufe, durch das zugleich ein Schaltelement im Stromversorgungsweg spannungskritischer Schaltungsteile synchron vom Sendeburstbefehl geschaltet und die Zuschaltung des Kondensators in diesem Weg bewirkt wird.

2. Funkgerät nach Anspruch 1,
**dadurch gekennzeichnet**, daß das Schaltelement aus einem mechanischen Umschalter (S) mit zwei Umschaltkontakten besteht, von denen der eine im Weg der Sendeendstufe (1) und der andere im Stromversorgungsweg spannungskritischer Schaltungsteile liegt und letztgenannter Umschaltkontakt in seinen beiden Schaltstellungen den Ladestromkreis für den Kondensator (C) schließt bzw. den Kondensator (C) mit der Gerätebatterie in Reihe schaltet.

3. Funkgerät nach Anspruch 1,
**gekennzeichnet** durch einen im Weg der Versorgungsspannung spannungskritischer Schaltungsteile liegenden Halbleiterschalter (T1), der einen außerhalb der Sendezeit des Funkgerätes aufgeladenen Kondensator (C) während der Sendezeit mit der Batteriespannung (U_{B}) in Reihe schaltet, wozu er mit dem im Funkgerät vorhandenen Sendebefehlssignal gesteuert wird.

4. Funkgerät nach Anspruch 1,
**gekennzeichnet** durch mit Halbleiterelementen realisierte Schaltelemente aus einem Leistungsschalter, z.B. einem Power FET oder Bipolartransistor, im Weg der Versorgungsspannung für die Sendeendstufe (1) und einem von der geschalteten Versorgungsspannung der Sendeendstufe (1) angesteuerten Transistor (2) im Weg der Versorgungsspannung spannungskritischer Schaltungsteile, über den der Kondenstor (C) aufgeladen wird.

5. Funkgerät nach einem der vorhergehenden Ansprüche,
**dadurch gekennzeichnet** daß die Schaltelemente eine Vorschaltzeit von einigen hundert Mikrosekunden zur Aussendung der Sendebursts aufweisen.

## Claims

1. Radio set with a battery power supply and with a voltage step-up conversion device for bridging brief voltage drops, characterized in that the voltage step-up conversion device consists of a capacitor (C) which is located in the power supply path of voltage-critical circuit parts and is charged in non-transmit operation, the voltage of which is added to the battery voltage (U_{B}) during the transmission bursts emitted in the transmission end-stage (1) in the power supply path of the voltage-critical circuit parts, and of a switching element (S, T1) in the power supply path of the transmission end-stage, which is driven by a control system for the transmission bursts and by which, at the same time, a switching element in the power supply path of voltage-critical circuit parts is synchronously switched by the transmission burst command and the capacitor is connected into this path.

2. Radio set according to Claim 1, characterized in that the switching element consists of a mechanical change-over switch (S) with two change-over contacts, one of which is in the path of the transmission end-stage (1) and the other of which is in the power supply path for the voltage-critical circuit parts, and the latter change-over contact closes the charging circuit for the capacitor (C) and connects the capacitor (C) in series with the battery of the set, respectively, in its two switching positions.

3. Radio set according to Claim 1, characterized by a semiconductor switch (T1) located in the path of the supply voltage of voltage-critical circuit parts, which, during the transmission time, connects in series with the battery voltage (U_{B}) a capacitor (C) charged outside the transmission time of the radio set, to which end this semiconductor switch is controlled by the transmission command signal existing in the radio set.

4. Radio set according to Claim 1, characterized by switching elements, made using semiconductor elements, consisting of a power switch, for example a power FET or a bipolar transistor, in the path of the supply voltage for the transmission end-stage (1), and a transistor (T2), driven by the switched supply voltage of the transmission end stage (1), in the path of the supply voltage of voltage-critical circuit parts, by means of which transistor the capacitor (C) is charged.

5. Radio set according to one of the preceding claims, characterized in that the switching elements have a preswitching time of a few hundred microseconds relative to the emission of the transmission burst.

## Revendications

1. Appareil radio ayant une alimentation en courant à batterie et un dispositif d'élévation de la tension pour combler des chutes de tension temporaires,
caractérisé en ce que le dispositif d'élévation de la tension est constitué d'un condensateur (C), qui se trouve dans la voie d'alimentation en courant de parties de circuit à tension déterminante, qui est chargé lors du fonctionnement de non-émission et dont la tension est additionnée pendant le paquet d'émission émis dans l'étage (1) final d'émission dans la voie d'alimentation en courant des parties de circuit à tension déterminante, à la tension (U_{B}) de batterie, et d'un élément (S, T1), d'interruption, qui est commandé par une commande du paquet d'émission, qui se trouve dans la voie d'alimentation en courant de l'étage final d'émission et par lequel un élément d'interruption se trouvant dans la voie d'alimentation en courant de parties de circuit à tension déterminante est branché en même temps en synchronisme avec l'instruction de paquet d'émission et par lequel est provoqué le branchement du condensateur dans cette voie.

2. Appareil radio suivant la revendication 1,
caractérisé en ce que l'élément d'interruption est constitué d'un commutateur mécanique (S) comportant deux contacts de commutation, dont l'un se trouve dans la voie de l'étage (1) final d'émission et dont l'autre se trouve dans la voie d'alimentation en courant de parties de circuit à tension déterminante, ce dernier contact de commutation, dans ses deux positions de commutation, fermant le circuit de courant de charge du condensateur (C) ou branchant en série le condensateur (C) avec la batterie de l'appareil.

3. Appareil radio suivant la revendication 1,
caractérisé par un interrupteur (T1) à semiconducteur, qui se trouve dans la voie de la tension d'alimentation de parties du circuit à tension déterminante, qui branche en série avec la tension (U_{B}) de batterie, pendant le temps d'émission, un condensateur (C) chargé en dehors du temps d'émission de l'appareil radio, cet interrupteur étant commandé à cet effet par le signal d'instruction d'émission disponible dans l'appareil radio.

4. Appareil radio suivant la revendication 1,
caractérisé par des éléments d'interruption formés d'éléments à semiconducteur et consistant en un interrupteur de puissance, par exemple en un transistor à effet de champ de puissance ou en un transistor bipolaire dans la voie de la tension d'alimentation de l'étage (1) final d'émission et en un transistor (T2) commandé par la tension d'alimentation branchée de l'étage (1) final d'émission dans la voie de la tension d'alimentation de parties de circuit à tension déterminante, le condensateur (C) étant chargé par l'intermédiaire de ce transistor (T2).

5. Appareil radio suivant l'une des revendications précédentes,
caractérisé en ce que les éléments d'interruption ont un temps de pré-interruption durant quelques centaines de micro-secondes pour l'émission des paquets d'émission.
